# EUROPÄISCHE PATENTSCHRIFT

(11) **EP 0 485 896 B1**
(45) Veröffentlichungstag und Bekanntmachung des Hinweises auf die Patenterteilung: **31.07.1996**
(21) Anmeldenummer: 91119009.8
(22) Anmeldetag: 07.11.1991
(51) Int. Cl.: B32B 31/20, B29C 59/04

(54) **Vorrichtung und Verfahren zum Herstellen eines mehrschichtigen Folienverbundes**
Method and apparatus for producing a multi-layer laminate
Dispositif et procédé pour produire un stratifié multicouche

(30) Priorität: 12.11.1990 DE 4035873
(43) Veröffentlichungstag der Anmeldung: 20.05.1992
(73) Patentinhaber: HOECHST AKTIENGESELLSCHAFT, 65926 Frankfurt am Main (DE)
(72) Erfinder: Rohleder, Sabine, Dipl.-Ing., W-6108 Weiterstadt (DE); Coutandin, Jochen, Dr. Dipl.-Phys., W-6536 Langenlonsheim (DE)

(56) Entgegenhaltungen:
- EP-A- 0 212 232
- EP-A- 0 363 794
- AU-B- 527 905
- DE-A- 3 020 008
- FR-A- 1 441 508
- FR-A- 2 167 876
- GB-A- 1 220 080
- GB-A- 2 127 344
- US-A- 27 992

## Beschreibung

Die Erfindung betrifft eine Vorrichtung zum Herstellen eines mehrschichtigen Folienverbundes aus miteinander gesiegelten Kunststoffolien, mit einer Anzahl von Vorratsrollen, auf denen die bandförmigen Kunststoffolien aufgewickelt sind, mit einer temperierbaren Walze als Siegelwerkzeug, dessen Umfangsfläche zum Siegeln der Kunststoffolienbänder dient, wobei entlang der Umfangsfläche der Walze, in gleichgroßen oder unterschiedlichen Abständen zueinander, Druckwalzen anliegen, und jedes Kunststoffolienband über die zugeordnete Druckwalze führbar ist und die Kontaktfläche zwischen der Druckwalze und Walze durchläuft, und die in Abständen voneinander auf die Umfangsfläche der Walze auflaufenden Kunststoffolienbänder unter Druck- und Wärmeanwendung auf die übereinandergeschichtet transportierten Kunststoffolienbänder durch die Druckwalzen miteinander siegelbar sind, sowie ein Verfahren zum Herstellen eines mehrschichtigen Folienverbundes aus biaxial und/oder monoaxial und/oder unverstreckten thermoplastischen Kunststoffolien, die zumindest einseitig mit einer Siegelschicht koextrudiert sind, durch Siegeln unter Druck- und Wärmeanwendung.

Seitens verschiedener Branchen, wie z. B. dem Apparatebau, dem Fahrzeug- und Flugzeugbau oder der Sicherheitstechnik, besteht ein zunehmend verstärktes Interesse an hochfesten Folienverbunden und Verbundkörpern sowohl in Form von Bändern als auch von Halbzeugen, wie z.B. Platten, als auch Fertigbauteilen. Dieser Entwicklung folgend werden von Plattenherstellern Techniken zur Fertigung mechanisch höher belastbarer Produkte erarbeitet. Parallel zur Modifizierung der für die Plattenproduktion vorgesehenen Polymerwerkstoffe durch den Einbau von Verstärkungsmaterialien, wie z.B. Textil-, Glas- oder Kohlenstoffasern, werden Techniken zur Herstellung eigenverfestigter Platten durch Orientierungsmaßnahmen entwickelt. Lösungen im Rahmen dieser Techniken stellen z.B. das Walzpreßstrecken oder das in der EP-A 0 207 047 beschriebene Verfahren dar, dessen wesentliche Verfahrensmaßnahme darin besteht, eine Vielzahl biaxial verstreckter, mit dünnen, koextrudierten Siegelschichten ausgerüsteter Folien zu einer beliebig dicken, homogenen Platte unter Anwendung von Druck und Wärme zu verpressen. Hierzu wird im allgemeinen der zwsichen zwei Preßbleche eingelegte Folienstapel in diskontinuierlich arbeitende, hydraulische Plattenpressen in Einfach- oder Etagenbauweise eingebracht. Der Preßvorgang wird durch Verfahrensparameter, wie Druck, Temperatur und Zeit, bestimmt. Insbesondere der letzte Verfahrensparameter steht, vor allem im Falle der Durchwärmung sehr dicker Platten, einer kostengünstigen Herstellung von Verbundlaminaten entgegen. Kontinuierliche Durchlaufpressen, insbesondere Doppelbandpressen, stellen diesbezüglich eine praktikable, zeitsparende Lösung dar, sind aber hinsichtlich der auf ihnen zu realisierenden Geschwindigkeiten nur begrenzt einsetzbar.

Aus der GB-A - 1.220.080 ist eine Vorrichtung zum Herstellen eines mehrschichtigen Folienverbundes aus miteinander gesiegelten Kunststoffolien der eingangs beschriebenen Art bekannt. Diese Vorrichtung umfaßt eine temperierbare Walze, die ein Siegelwerkzeug bildet und deren Umfangsfläche zum Siegeln der Kunststoffolienbänder dient. Entlang der Umfangsfläche der Walze sind in gleichgroßen oder unterschiedlichen Abständen zueinander nicht beheizte Druckwalzen angeordnet, die an der Umfangsfläche der Walze anliegen. Jedes Kunststoffolienband, das von einer Vorratsrolle über die zugeordnete Druckwalze geführt ist, durchläuft die Kontaktfläche zwischen der Druckwalze und der Walze. Die in Abständen voneinander auf die Umfangsfläche der Walze auflaufenden Kunststoffolienbänder sind unter Druck- und Wärmeanwendung auf die übereindergeschichtet transportierten Kunststoffolienbänder durch die Druckwalzen miteinander siegelbar.

Die DE-A - 30 20 008 beschreibt eine Vorrichtung zur Herstellung einer Laminatbahn aus aufeinanderliegenden, kunstharzimprägnierten Trägerbahnen, mit einer Vorpreßeinrichtung aus Einlaufwalze und Gegenwalze und mit einer Auslaufeinrichtung aus Auslaufwalze und Gegenwalze. Sowohl der Einlaufwalze als auch der Auslaufwalze ist jeweils eine Nachwalze nachgeschaltet. Die Einlaufwalze und die nachgeschaltete Nachlaufwalze sind beheizt.

In der DE-PS 35 30 309 sind ein Verfahren und eine Vorrichtung zum kontinuierlichen Herstellen von thermoplastischen Kunststoffbahnen, insbesondere für die Weiterverarbeitung zu Platten oder Folien, beschrieben, aus mindestens einer extrudierten, auf Verarbeitungstemperatur erwärmten Thermoplastbahn, die in erwärmtem Zustand zwischen zwei ortsfest angeordneten Druckplatten abgekühlt wird, so daß die Oberfläche der Thermoplastbahn kalibriert und geglättet wird. Die Abkühlung der Thermoplastbahn wird unter Einwirkung von Flächendruck vorgenommen, wozu sie während der Abkühlung zwischen zwei kontinuierlich bewegten, endlos umlaufenden Preßbändern geführt wird. Dabei wird ein gleichmäßiger Flächendruck von den Druckplatten hydraulisch oder mechanisch auf die Innenseiten der sich bewegenden Preßbänder ausgeübt und von diesen auf die Thermoplastbahn übertragen. Die Druckplatten werden auf eine niedrigere Temperatur als die Endtemperatur der Thermoplastbahn gehalten, um so ein Temperaturgefälle zwischen Thermoplastbahn, Preßband und Druckplatte aufrechtzuerhalten. Die Abkühlung der Thermoplastbahn erfolgt, indem Wärme aus der Bahn über das Preßband auf die Druckplatten mittels Wärmeleitung abgeführt wird. Der Flächendruck wirkt während der gesamten Dauer der Abkühlung der Thermoplastbahn zwischen den Preßbändern ein.

Aufgabe der Erfindung ist es, eine Vorrichtung der eingangs beschriebenen Art so weiterzuentwickeln, daß eine kontinuierliche, kostensparende Fertigung eines Folienverbundbandes vorgegebener Dicke mit hoher Geschwindigkeit aus heißsiegelfähigen Kunststoffolien mit gegenüber extrudierten Folien gleicher Dicke wie der Folienverbund verbesserten mechanischen Eigenschaften und zumindest gleichbleibenden optischen Eigenschaften des Folienverbundes gegenüber der einzelnen Kunststoffolie ermöglicht wird.

Diese Aufgabe wird durch eine Vorrichtung nach der Erfindung derart gelöst, daß die Druckwalzen beheizt sind, daß nahe dem Spalt zwischen der einzelnen Druckwalze und der Umfangsfläche der Walze jeweils eine verfahrbare Heizeinrichtung zum Anschmelzen von Siegelschichten und/oder zum Verändern mechanischer Eigenschaften der Kunststoffolienbänder angeordnet ist, daß der Abstand der einzelnen Heizeinrichtung zu der Walze einstellbar ist und die einzelne Heizeinrichtung entlang einem Teilstück der Bahn des Kunststoffolienbandes verfahrbar ist, daR die Druckwalzen hydraulisch, pneumatisch oder mechanisch unterschiedlich stark gegen die Walze andrückbar sind, um einen variablen Liniendruck auf das einzelne Kunststoffolienband auszuüben und daß der Walze zumindest eine Kühl-, Präge- und/oder Preßeinrichtung zugeordnet ist.

Die Weiterbildung der Vorrichtung nach der Erfindung ergibt sich aus den Merkmalen der Patentansprüche 2 bis 12.

Das Verfahren zum Herstellen eines mehrschichtigen Folienverbundes aus biaxial und/oder monoaxial und/oder unverstreckten thermoplastischen Kunststoffolien, die zumindest einseitig mit einer Siegelschicht koextrudiert sind, durch Siegeln unter Druck- und Wärmeanwendung, unter Verwendung der Vorrichtung gemäß Anspruch 1, zeichnet sich dadurch aus, daR der Folienverbund durch kontinuierliches, additives Aufsiegeln einzelner bewegter Kunststoffolienbänder auf ein bewegtes erstes Kunststoffolienband bis zu einer vorgegebenen Enddicke aufgebaut wird, wobei die Kunststoffolienbänder getrennt und im Abstand voneinander einer beheizbaren Walzenfläche zugeführt und entlang dieser Walzenfläche geführt werden, daß jedes Kunststoffolienband vor dem Auflaufen auf die beheizte Walzenfläche zusätzlich erwärmt wird, um die Siegelschichten der Kunststoffolienbänder anzuschmelzen und/oder die mechanischen Eigenschaften der Kunststoffolienbänder zu beeinflussen, daß auf jedes der Kunststoffolienbänder unmittelbar an seiner Auflaufstelle auf die Walzenfläche Druck ausgeübt wird und daß der Folienverbund nach dem Ablösen von der Walzenfläche durch Anblasen mit Kühlluft und/oder durch Kontakt mit Kühlwalzen und/oder einer gekühlten Doppelbandpresse abgekühlt wird und/oder ein- oder beidseitig geprägt wird.

Die Weiterbildung des Verfahrens ergibt sich aus den Merkmalen der Patentansprüche 14 bis 20.

Der Dickenaufbau eines Folienverbundes in Bandform durch kontinuierliches, additives Auflaminieren einzelner Kunststoffolienbänder wird erreicht, indem die Heißsiegelschichten der Kunststoffolienbänder unmittelbar vor dem Zusammenführen der Bänder kurzzeitig angeschmolzen und mittels Liniendruck verpreßt werden. Gegenüber dem zeitaufwendigen, herkömmlichen Verpressen eines kompakten Folienstapels in Plattenpressen bzw. dem Auslösen des für eine homogene Verbindung notwendigen thermischen Folienschrumpfes im Falle einer Rohrfertigung, ergeben sich bei der Erfindung die Vorteile, daß der Aufheiz- und Anschmelzvorgang der nur wenige µm dicken Siegelschichten der Kunststoffolienbänder in extrem kurzer Zeit und damit auch unter weitgehender Vermeidung einer thermischen Schädigung des Kunststoffmaterials durchgeführt werden kann, daß bei dem kontinuierlichen Verfahren relativ hohe Geschwindigkeiten erreichbar sind und daß der Folienverbund als Rollenware hergestellt wird, die problemlos weiterverarbeitet werden kann. Im Gegensatz zum Pressen eines kompakten Folienstapels, in dem jede Folienlage ein anderes Temperaturprofil hat, erfolgt das Verpressen bei der Erfindung unter stets konstanten, schonenden Konditionen für jedes der einzelnen Kunststoffolienbänder. Im Vergleich zu dem Verpressen eines Folienstapels mittels einer Doppelbandpresse ergeben sich niedrigere Investitionskosten, eine höhere Verarbeitungsgeschwindigkeit und eine Vereinfachung der Variationsmöglichkeiten zur Strukturierung, Kalibrierung und der Weiterverarbeitung der Oberflächen des Folienverbundes.

Die Erfindung wird im folgenden anhand der Zeichnungen näher erläutert. Es zeigen:
- Figur 1: eine schematische Ansicht einer ersten Ausführungsform der Vorrichtung nach der Erfindung,
- Figur 2: eine schematische Ansicht einer zweiten Ausführungsform der Vorrichtung, mit einer Kühlanordnung und einer temperierbaren Doppelbandpresse für den Folienverbund,
- Figur 3: eine dritte Ausführungsform der Vorrichtung in schematischer Darstellung, mit einer Walzenanordnung zum Dehnen des Folienverbundes,
- Figur 4: eine vierte Ausführungsform der Vorrichtung in schematischer Darstellung, mit Prägefolien zum Strukturieren der Oberflächen des Folienverbundes,
- Figur 5: eine fünfte Ausführungsform der Vorrichtung, mit einem Prägeband zum Strukturieren der Oberflächen des Folienverbundes,
- Figur 6a: eine sechste Ausführungsform der Vorrichtung mit einer Prägestation, zwischen deren Walzen der Folienverbund hindurchläuft und geprägt wird,
- Figur 6b: eine gegenüber der Ausführungsform nach Fig. 6a leicht abgewandelte Prägestation, bei der der Folienverbund über Führungswalzen geführt ist und von diesen geprägt wird, und
- Figur 7: eine siebente Ausführungsform der Vorrichtung, bei welcher der Folienverbund in Planlage eine Kühlanordnung durchläuft.

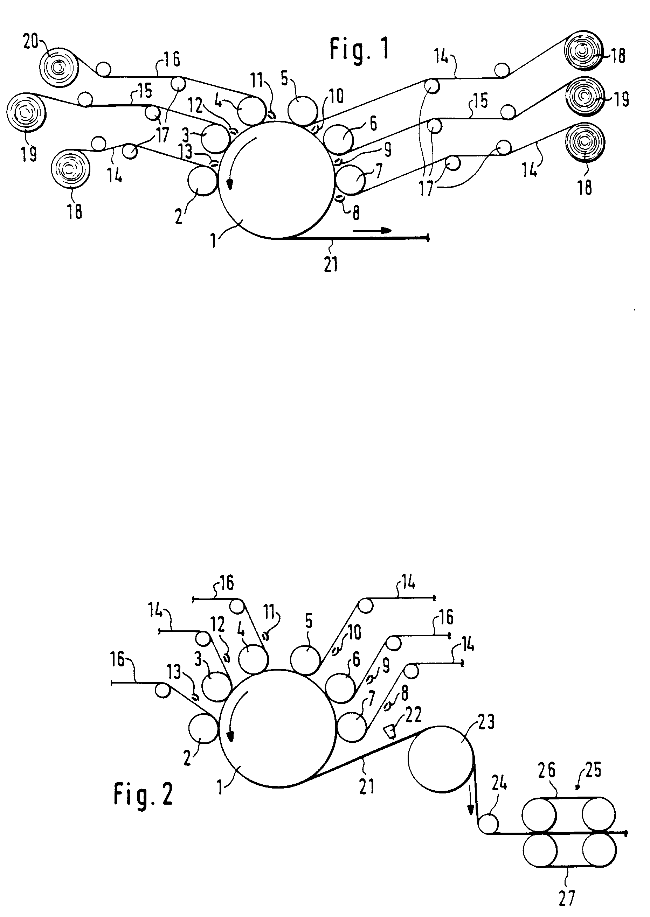

In Figur 1 ist in schematischer Schnittansicht eine erste Ausführungsform der Vorrichtung nach der Erfindung zum Herstellen eines mehrschichtigen Folienverbundes 21 dargestellt. Eine temperierbare Walze 1, bei der es sich im allgemeinen um eine angetriebene Stahlwalze großen Durchmessers handelt, besitzt eine hochglanzpolierte oder mattierte Umfangsfläche und bildet ein Siegelwerkzeug für eine Anzahl von Kunststoffolienbändern, die miteinander gesiegelt werden. Bei diesen Kunststoffolienbändern, die auf Vorratsrollen 18, 19, 20 aufgewickelt sind, handelt es sich beispielsweise um biaxial verstreckte Kunststoffolienbänder 14, monoaxial verstreckte Kunststoffolienbänder 15 und unverstreckte Kunststoffolienbänder 16. Entlang der Umfangsfläche der Walze 1 sind in gleichgroßen oder unterschiedlichen Abständen zueinander beheizte Druckwalzen 2, 3 bis 7 angeordnet, die unter Druck an die Umfangsfläche der Walze 1 anliegen. Bei sämtlichen in den Figuren 1 bis 7 dargestellten Ausführungsbeispielen der Vorrichtung nach der Erfindung sind nicht mehr als sechs derartige Kunststoffolienbänder aus Platzgründen dargestellt, jedoch können bis zu zwanzig einzelne Kunststoffolienbänder miteinander gesiegelt werden. Die Anzahl der Druckwalzen ist gleich oder größer als die Anzahl der Kunststoffolienbänder.

Wie Figur 1 zeigt, ist das einzelne, biaxial verstreckte Kunststoffolienband auf einer Vorratsrolle 18 aufgewickelt, während jedes einzelne monoaxial verstreckte Kunststofffolienband 15 und jedes unverstreckte Kunststoffolienband 16 auf eine Vorratsrolle 19 bzw. 20 aufgewickelt ist. Es ist selbstverständlich, obgleich dies in Figur 1 nicht dargestellt ist, daß alle miteinander zu siegelnden Kunststoffolienbänder aus dem gleichen Kunststoff, beispielsweise Polypropylen mit der gleichen Veredelung, d.h. ausschließlich biaxial oder monoaxial verstreckt, zu dem Folienverbund 21 gesiegelt werden können. Es können selbstverständlich auch Folien aus unterschiedlichen Ausgangsmaterialien zu einem Folienverbund gesiegelt werden. Vorraussetzung ist lediglich die Siegelbarkeit der Einzelfolien untereinander. Das einzelne Kunststoffolienband wird über Führungsrollen 17 der zugehörigen Druckwalze 2, 3, ... oder 7 zugeführt Bei diesen Druckwalzen handelt es sich um angetriebene, beheizbare Walzen, deren Durchmesser im Vergleich zu dem Durchmesser der Walze 1 sehr viel kleiner ist, was im Hinblick auf ihre Anzahl von bis zu 20 Stück selbsterklärend ist. Die Kunststoffolienbänder sind ein- oder beidseitig mit Siegelschichten ausgestattet, die während des Siegelvorgangs der Kunststoffolienbänder angeschmolzen werden, wie nachstehend noch näher erläutert werden wird. Bei den Druckwalzen 2 bis 7 handelt es sich beispielsweise um Presseure, deren Metallwalzenkörper mit temperaturbeständigen Gummischichten belegt sind und die über nicht dargestellte Heizsysteme beheizt werden. Ebenso können die Führungsrollen 17, die den einzelnen Presseuren vorgeschaltet sind, vorgeheizt sein, so daß die von den Vorratsrollen den Presseuren zugeführten Kunststoffolienbahnen schon aufgeheizt sind. Die Druckwalzen bzw. Presseure 2 bis 7 sind hydraulisch, pneumatisch oder mechanisch über ein Hebelsystem verfahrbar, so daß sie von der Umfangsfläche der Walze 1 abgehoben werden können, um das Einführen des einzelnen Kunststoffolienbandes in den Spalt zu erleichtern, der von der Umfangsfläche der Walze 1 und der jeweiligen Druckwalze 2 bis 7 begrenzt wird. Die Druckwalzen können auch reine Metallwalzen ohne Gummibeschichtung sein.

Die Positionierung der Druckwalzen bzw. der Presseure in ihren Arbeitsstellungen, bzw. das Aufbringen des Drucks, mit dem die Druckwalzen an die Walze 1 angelegt werden und dabei einen entsprechenden Siegeldruck ausüben, um das jeweilige Kunststoffolienband auf den schichtmäßig anwachsenden Folienverbund zu siegeln, kann, wie schon erwähnt, entweder hydraulisch, pneumatisch oder durch einen Hebelmechanismus geschehen.

Nahe den Kontaktflächen von der Walze 1 und den einzelnen Presseuren ist jeweils eine verfahrbare Heizeinrichtung 8, 9, ... 13 zum gezielten Verändern der mechanischen Eigenschaften der Ausgangsfolie, z.B. durch Schrumpfen und, wenn nötig, zusätzlich zu den beheizten Walzen, zum Anschmelzen der Siegelschichten der Kunststoffolienbänder angeordnet. Bei dieser Heizeinrichtung handelt es sich insbesondere um Infrarotstrahler, die entlang einem Teilstück der Bahn des Kunststoffolienbandes verfahrbar sind. Diese Heizeinrichtungen können auch mit Heißluft beaufschlagbare Luftdüsen sein, die das Anschmelzen der Siegelschichten der Kunststoffolienbänder unmittelbar vor dem Zusammenführen im jeweiligen Spalt bewirken. In Figur 2 sind die Heizeinrichtungen 8 bis 13 in Positionen außerhalb der Spalten zwischen der Walze 1 und den Druckwalzen 2 bis 7 dargestellt. Der Abstand der Heizeinrichtungen zu der Umfangsfläche der Walze 1 ist gleichfalls einstellbar.

Die schwerpunktmäßig herausgehobene Verwendung koextrudierter biaxial oder monoaxial verstreckter, mit Siegelschichten ausgerüsteter Kunststoffolienbänder für das Laminieren bzw. Siegeln zu einem Folienverbund bedeutet keine Einschränkung der Erfindung auf diese Ausgangsmaterialien. Eine praktische Alternative zur Herstellung eines Folienverbundes aus koextrudierten Kunststoffsiegelbändern ergibt sich durch ein schichtmäßiges Siegeln von materialmäßig absolut identischen Monofolien, die nicht verstreckt sind und sich einzig und allein durch ihren Orientierungsgrad und die daraus resultierende morphologische Struktur unterscheiden. Gegenüber unverstreckten Monofolien weisen mono- oder biaxial verstreckte Folien eine andere morphologische Struktur auf, die sich u.a. in differierenden Schmelztemperaturen der Kunststoffolien niederschlägt. Dies läßt sich dahingehend nutzen, daß in einem Folienverbund, bestehend aus alternierend geschichteten unverstreckten und verstreckten Kunststofffolienbändern, die unverstreckten Kunststoffolienbänder bei den üblichen Verarbeitungsbedingungen bereits anschmelzen und dadurch Haftvermittlerfunktionen gegenüber den bei den Druck- und Wärmebedingungen des Siegelvorgangs noch nicht schmelzenden, verstreckten Kunststoffolienbändern übernehmen. Mit anderen Worten bedeutet dies, daß bei einer derartigen alternierenden Schichtung von verstreckten und unverstreckten Kunststofffolienbändern keines der Bänder Siegelschichten aufweisen muß und sie trotzdem miteinander laminiert werden können. Die Dicke des geschichteten Folienverbundes 21 liegt im Bereich von 100 bis 600 µm.

Die in Figur 2 gezeigte zweite Ausführungsform der erfindungsgemäßen Vorrichtung ist in bezug auf die Walze 1, die Druckwalzen bzw. Presseure 2 bis 7 und die Zuführung der Kunststoffolienbänder 14 und 16 ähnlich aufgebaut wie die erste Ausführungsform nach Figur 1. Aus Platzgründen sind bei dieser Ausführungsform die Vorratsrollen für die Kunststoffolienbänder weggelassen. Es werden beispielsweise mit dieser Vorrichtung biaxial verstreckte Kunststofffolienbänder 14 alternierend mit unverstreckten Kunststofffolienbändern 16 zu dem Folienverbund 21 gesiegelt bzw. laminiert. Diese Ausführungsform der Vorrichtung ist mit Zusatzaggregaten ausgerüstet, wie beispielsweise einer Kühleinrichtung aus einem Ventilator oder einer Luftdüse 22, aus der Kühlluft auf die Oberseite des Folienverbunds 21 geblasen wird, und/oder aus einer temperierbaren Kühlwalze 23, über die der Folienverbund 21 entlang einem Teilumfang nach dem Ablösen von der Walze 1 geführt ist. Nach der Kühlwalze 23 ist eine Umlenkwalze 24 vorgesehen, durch welche der Folienverbund 21 aus seiner Vertikalrichtung in eine Horizontalrichtung umgelenkt wird, um anschließend eine temperierbare Doppelbandpresse 25 zu durchlaufen, die aus zwei endlos umlaufenden Preßbändern 26 und 27 besteht, die eine gemeinsame Druckfläche bilder, durch die der Folienverbund 21 hindurchgeführt wird. Mit Hilfe dieser Doppelbandpresse 25 kann sowohl die Ober- als auch die Unterseite des Folienverbunds 21 in einer vorgegebenen Weise strukturiert oder auch geglättet werden. Die Doppelbandpresse kann auch zur Künlung des Folienverbundes genutzt werden, entweder allein oder in Kombination mit dem Ventilator und/oder der Kühlwalze. Ebenso kann die Künlung durch ein Kühlbad allein oder in Verbindung mit den zuvor erwähnten Kühlaggregaten erfolgen.

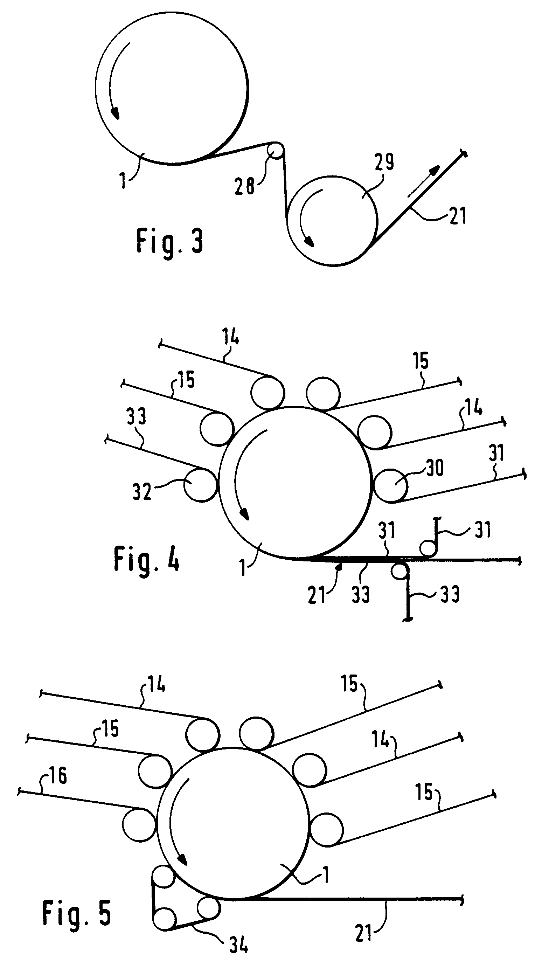

In Figur 3 ist eine dritte Ausführungsform der Vorrichtung gezeigt, die sich gegenüber der ersten und zweiten Ausführungsform der Vorrichtung dadurch unterscheidet, daß als Zusatzaggregat eine Walzenanordnung aus einer temperierbaren Walze 28 und einer angetriebenen, gleichfalls temperierbaren Walze 29 vorhanden ist, wobei der Durchmesser der Walze 29 ein Mehrfaches des Durchmessers der Walze 28 beträgt. Mit dieser Walzenanordnung wird der Rollneigung des Folienverbundes 21 durch Dehnen desselben, indem eine hohe Zugkraft auf den Folienverbund ausgeübt wird, entgegengewirkt. Diese Rollneigung entsteht beispielsweise dadurch, daß das oberste Kunststoffolienband eine größere Länge aufweist als das unterste Kunststoffolienband des geschichteten Folienverbunds 21, das die Grundschicht des Schichtaufbaus bildet.

Der Folienverbund 21 wird über die Walze 28 mit dem kleinen Durchmesser gezogen, wodurch es zu einer Streckung der Basisschicht bzw. des untersten Kunststoffolienbandes kommt und somit die Längenunterschiede zwischen dem untersten und obersten Kunststoffolienband ausgeglichen werden, wodurch die Rollneigung des Folienverbunds 21 eliminiert wird.

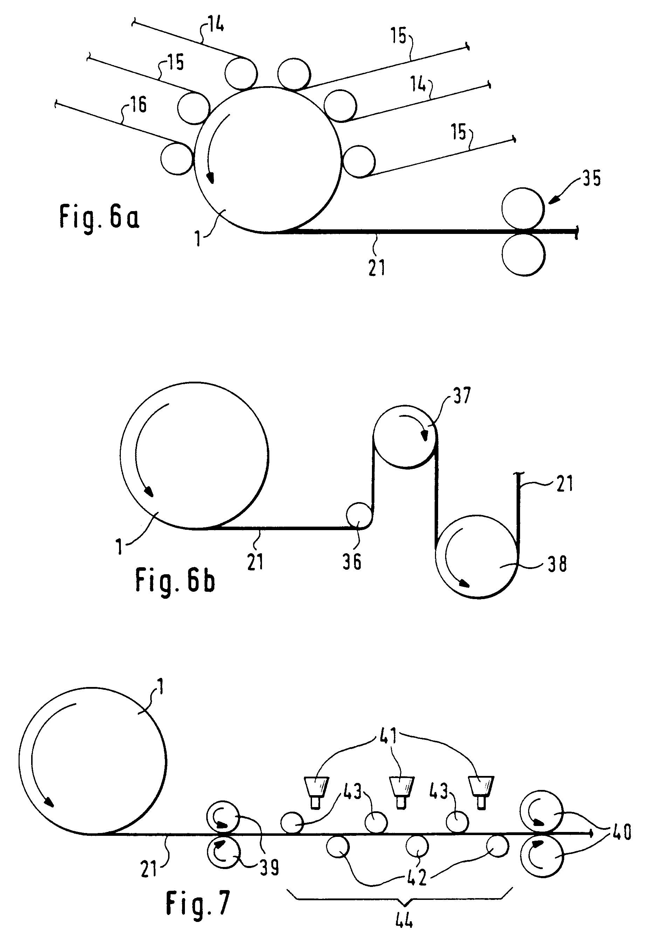

In den Figuren 4 bis 6a und 6b sind verschiedene Prägeeinrichtungen für den Folienverbund 21 als Zusatzaggregate zu der Walze 1 dargestellt. Bei der in Figur 4 gezeigten vierten Ausführungsform der Vorrichtung sind zwei Prägefolien 31 und 33 vorhanden, die über Teilumfänge der Walze 1 geführt sind. Die Vorratsrollen für diese Prägefolien sowie für die Kunststoffolienbänder 14 und 15 sind aus Gründen der besseren Übersichtlichkeit weggelassen worden. Die Prägefolie 31 läuft von der nicht gezeigten Vorratsrolle über eine Druckwalze 30 auf die Umfangsfläche der Walze 1 als Unterlage des schichtmäßig aufzubauenden Folienverbundes 21 auf. Als unterste Schicht des Folienverbunds 21 wird beispielsweise ein biaxial verstrecktes Kunststoffolienband 14 der Walze 1 zugeführt, auf das aufeinanderfolgend monoaxial und biaxial verstreckte Kunststoffolienbänder 15, 14, 15 aufgeschichtet werden. Als letzte und oberste Schicht gelangt die Prägefolie 33 über eine Druckwalze 32 auf den mehrschichtigen Folienverbund 21. Nach dem Ablösen des Folienverbundes 21 und der beiden Prägefolien 31 und 33 von der Walze 1 werden die Prägefolien über Umlenkrollen von dem Folienverbund 21 abgelöst und auf nicht gezeigte Aufwickelrollen aufgerollt.

Die fünfte Ausführungsform der Vorrichtung, wie sie in Figur 5 schematisch gezeigt ist, besitzt als Zusatzaggregat ein über Rollen endlos umlaufendes Prägeband 34, das an einem Teilumfang der Walze 1 anliegt. Mit Hilfe dieses beispielsweise metallischen Prägebandes 34 ist es möglich, nur die Unterseite des Folienverbundes 21 zu strukturieren, während die Oberseite unstrukturiert bleibt. Die übrigen Einzelteile dieser Vorrichtung zum Zuführen der einzelnen Kunststoffolienbänder sind die gleichen wie bei den Ausführungsformen der Vorrichtung nach den Figuren 1 bis 4 und werden daher nicht nochmals beschrieben. Die Prägung der Unterseite mit Hilfe des Prägebandes 34 erfolgt vor dem Ablösen des Folienverbundes 21 von der Walze 1. Nach dem Ablösen des Folienverbundes 21 von der Walze kann noch eine Kühlbehandlung in einer entsprechenden Kühlanordnung, die nicht gezeigt ist, vorgenommen werden. Bei der in Figur 6a gezeigten sechsten Ausführungsform der erfindungsgemäßen Vorrichtung ist für das beidseitige Prägen des Folienverbunds 21 eine Prägestation 35, die zwei Prägerollen umfaßt, in Laufrichtung des Folienverbundes 21 nach der Walze 1 angeordnet. Der Folienverbund 21 durchläuft nach dem Ablösen von der Walze 1 einen Spalt zwischen den beiden Prägewalzen der Prägestation 35, so daß die Ober- und Unterseite des Folienverbundes 21 eine entsprechende Strukturierung erfahren.

Eine andere Möglichkeit der Oberflächenstrukturierung des Folienverbundes 21 ergibt sich mit der in Figur 6b dargestellten Vorrichtung. Hierzu wird der Folienverbund 21 mit hoher Zugspannung nach dem Ablösen von der Walze 1 über eine Umlenkrolle 36 und in Mäanderform über temperierbare Walzen 37 und 38 gezogen, die in Vertikalrichtung zueinander versetzt sind. Die Oberflächen der Walzen 37 und 38 sind entweder hochglanzpoliert oder strukturiert. Durch die hohe Zugspannung, die auf den Folienverbund 21 durch die entsprechende Antriebsgeschwindigkeit der Walzen ausgeübt wird, kommt es zu einer entsprechenden Strukturierung der beiden Seiten des Folienverbundes 21.

In Figur 7 ist eine Kühlanordnung 44 bzw. Kühlstrecke gezeigt, die nach der Walze 1 angeordnet ist. Eine derartige Kühlanordnung 44 kann bei allen Ausführungsformen, wie sie in den voranstehenden Figuren 1 bis 6b gezeigt sind, vorhanden sein. Die Kühlanordnung 44 besteht aus einer Anzahl von Ventilatoren 41 oder Luftdüsen, die mit Kühlluft beaufschlagt werden, und oberhalb des in Planlage transportierten Folienverbundes 21 angebracht sind. Desweiteren umfaßt die Kühlanordnung 44 untere Kühlwalzen 42, über die der Folienverbund 21 transportiert wird, und obere Kühlwalzen 43, die mit der Oberseite des Folienverbundes 21 in Kontakt stehen. Die Kühlwalzen 42 und 43 sind zueinander versetzt, so daß sie alternierend mit der Ober- und Unterseite des Folienverbundes 21 in Berührung stehen.

Im folgenden wird die Betriebsweise der einzelnen Ausführungsformen der Erfindung näher beschrieben. Die einzelnen Kunststoffolienbänder 14 bis 16 sind auf Vorratsrollen 18, 19 und 20 aufgewickelt und werden über Führungsrollen 17 der Umfangsflächen der Walze 1 zugeführt. Die in Figur 1 auf der rechten Seite der Walze 1 als unterstes Kunststoffolienband gezeigte biaxial verstreckte Kunststoffolie wird als unterste bzw. als Basisschicht um einen großen Teilumfang der Walze 1 herumgeführt. Dieses Kunststoffolienband 14 besitzt beispielsweise nur an seiner, von der Walze 1 abgewandten Seite eine Siegelschicht, die durch die Walze 1 und die Druckwalze 7 und, wenn nötig, durch die Heizeinrichtung 8 angeschmolzen wird. In einem bestimmten Abstand von der Auflaufstelle des Kunststoffolienbandes 14 auf die Walze 1 befindet sich die Auflaufstelle für das monoaxial verstreckte Kunststoffolienband 15, das gleichfalls erwärmt wird. Dieses Kunststoffolienband 15 ist mit Siegelschichten ausgerüstet und wird unter Druckanwendung durch die Druckwalze 6 auf das Kunststoffolienband 14 aufgesiegelt. Die nächste Auflaufstelle für ein weiteres Kunststoffolienband 14 auf die Umfangsfläche der Walze 1 befindet sich im gleichen Abstand von der Druckwalze 7 entfernt, der zwischen den beiden Druckwalzen 7 und 6 vorhanden ist. Dieses weitere Kunststoffolienband 14 wird gleichfalls durch eine Heizeinrichtung 10 wärmebehandelt und durch den ausgeübten Druck der Druckwalze 5 auf die beiden schon miteinander gesiegelten Kunststoffolienbänder 14 und 15 auflaminiert. Auf die gleiche Weise werden dann der Reihe nach noch ein unverstrecktes Kunststoffolienband 16, ein monoaxial verstrecktes Kunststoffolienband 15 sowie ein biaxial verstrecktes Kunststoffolienband 14 der Reihe nach unter Druck und Wärmeanwendung auf die schon miteinander gesiegelten drei Kunststoffolienbänder zu dem endgültigen Folienverbund 21 aufgesiegelt.

Auf diese Art und Weise kann beispielsweise ein Folienverbund aus bis zu zwanzig Einzelfolien aus Polypropylen aufgebaut werden, wobei die Einzelfolien biaxial und/oder monoaxial verstreckt und/oder unverstreckt, thermoplastisch, ein- oder beidseitig mit Siegelschichten ausgerüstet sein können. Desweiteren können die Einzelfolien druckvorbehandelt oder nicht vorbehandelt sein. Durch den Einsatz der Heizeinrichtungen in Gestalt der Infrarotstrahler 8 bis 13 können die mechanischen Eigenschaften der Ausgangsfolien, z.B. bei orientierten Folien durch Schrumpfen, und somit auch die Eigenschaften des Folienverbundes nach Wunsch beeinflußt werden. Bei dem Verfahren können gleichartige oder unterschiedliche Kunststofffolienbänder miteinander gesiegelt werden. Das bezieht sich sowohl auf veredelte als auch nichtveredelte Ausgangsfolien. Als Ausgangsfolien können ebenso Metallfolien allein oder im Verbund mit Kunststoffolien, Papierbahnen oder sonstige Materialien, die nicht aus Kunststoff bestehen, verwendet werden. Bei der Wärmeanwendung muß beachtet werden, daß die Siegeltemperatur unterhalb der Schmelztemperatur der einzelnen Kunststoffolienbänder gehalten werden muß, wobei im allgemeinen die unverstreckten Folienbänder gegenüber den verstreckten Folienbändern eine niedrigere Schmelztemperatur besitzen.

Durch das Erwärmen jedes Kunststoffolienbandes vor dem Auflaufen auf die Umfangsfläche der beheizten Walze 1 werden die Siegelschichten der Kunststoffolienbänder angeschmolzen. Die benötigte Siegeltemperatur liegt, je nach dem Siegelrohstoff, zwischen 90 ° und 140 °C. Da die Siegeltemperatur stets unterhalb der Schmelztemperatur von Polypropylen gehalten wird, werden die in den einzelnen Kunststoffolienbändern vorhandenen Orientierungen durch die Verstreckung auch nach dem Siegeln beibehalten.

Nach dem Abzug von der Walze 1 wird der Folienverbund 21 nach Figur 1 über nicht gezeigte Führungswalzen aufgewickelt und ist sodann für eine Weiterverarbeitung vorgesehen.

Bei den in den Figuren 2 bis 7 gezeigten Ausführungsformen der Vorrichtung wird der Folienverbund 21 nach dem Ablösen von der Umfangsfläche der Walze 1 zusätzlichen Verfahrensschritten unterzogen, wie beispielsweise mit Kühlluft durch den Ventilator 22 in Figur 2 angeblasen und durch Kontakt mit der temperierbaren Kühlwalze 23 und/oder der gekühlten Doppelbandpresse 25 abgekühlt. Anstelle des Ventilators 22 kann auch eine Luftdüse verwendet werden, durch die Kühlluft auf die Oberseite des Folienverbundes 21 geblasen wird. Durch das Abkühlen des Folienverbundes 21 wird seine Planlage verbessert.

Mit den Zusatzaggregaten gemäß der Figur 3 zu der Vorrichtung nach der Erfindung kann der Folienverbund 21 durch die temperierbare Walze 28 und die angetriebene temperierbare Walze 29 gedehnt werden, um einer auftretenden Rollneigung des Folienverbundes entgegenzuwirken.

Weitere Verfahrensmaßnahmen zur Behandlung des Folienverbundes 21 schließen eine ein- oder beidseitige Prägung des Folienverbundes ein, wobei unterschiedliche Prägemaßnahmen getroffen werden können. Mit den Zusatzaggregaten gemäß den Figuren 4 bis 7 werden diese Prägungsverfahrensschritte durchgeführt. Eine einseitige Prägung der Unterseite des Folienverbundes 21 erfolgt mit dem endlos, geschlossen umlaufenden Prägeband 34 aus Metall, wie dies in Figur 5 dargestellt ist. Eine beidseitige Prägung des Folienverbundes 21 wird in der Prägestation 35 vorgenommen, die aus zwei Prägerollen besteht, durch deren Walzenspalt der Folienverbund 21, wie in Figur 6a gezeigt, hindurchläuft. Ebenso ist eine beidseitige Prägung des Folienverbundes 21 mit Hilfe der beiden Prägefolien 31 und 33 durchführbar, wie dies in Figur 4 dargestellt ist. Diese beiden Prägefolien schließen über verschieden große Teilumfänge der Walze 1 den Folienverbund 21 beidseitig ein, und durch die entsprechende Druckanwendung auf den mehrschichtigen Folienverbund und auf die mitlaufenden Prägefolien werden die Unter- und die Oberseite des Folienverbundes 21 entsprechend den Mustern der Prägefolien strukturiert.

Eine andere Verfahrensmaßnahme zum Strukturieren des Folienverbundes 21 besteht bei der Vorrichtung nach Figur 6b darin, den Folienverbund mäanderartig über antreibbare und temperierbare Walzen 37, 38 zu führen und durch die regelbare Umlaufgeschwindigkeit dieser Walzen eine variable Zugspannung auf den Folienverbund 21 auszuüben, wodurch es gleichfalls zu einer Strukturierung der Oberflächen des Folienverbundes kommt. Eine weitere Möglichkeit, die Folie ein- oder beidseitig zu prägen, besteht darin, die Walzen 37 und/oder 38 als Prägewalzen auszugestalten.

Ist eine besonders gute Planlage des Folienverbundes 21 gewünscht, so erfolgt eine intensive Kühlung bei horizontalem Folienverbundlauf mit der Vorrichtung nach Figur 7, bei der in Kombination temperierbare Kühlwalzen und Ventilatoren bzw. Luftdüsen, durch die Kühlluft auf die Oberfläche des Folienverbundes geblasen wird, zusammenwirken.

Die Folienverbunde können als Ausgangsmaterial zur Herstellung mehrlagiger Dickfolien oder Platten verwendet werden, indem anstelle der einzelnen Kunststoffolienbänder derartige Folienverbunde, wie sie nach den voranstehend beschriebenen Verfahren produziert werden, miteinander auf die gleiche Weise wie die Folienbänder gesiegelt werden.

## Patentansprüche

1. Vorrichtung zum Herstellen eines mehrschichtigen Folienverbundes aus miteinander gesiegelten Kunststoffolien, mit einer Anzahl von Vorratsrollen, auf denen die bandförmigen Kunststoffolien aufgewickelt sind, mit einer temperierbaren Walze (1) als Siegelwerkzeug, dessen Umfangsfläche zum Siegeln der Kunststoffolienbänder (14, 15, 16) dient, wobei entlang der Umfangsfläche der Walze (1), in gleichgroßen oder unterschiedlichen Abständen zueinender, Druckwalzen (2, 3, 4, ...7, ...) anliegen, und jedes Kunststoffolienband über die zugeordnete Druckwalze führbar ist und die Kontaktfläche zwischen der Druckwalze und Walze durchläuft, und die in Abständen voneinander auf die Umfangsfläche der Walze (1) auflaufenden Kunststoffolienbänder (14, 15, 16) unter Druck- und Wärmeanwendung auf die übereinandergeschichtet transportierten Kunststoffolienbänder durch die Druckwalzen (2, 3, 4, ...7, ...) miteinander siegelbar sind, dadurch gekennzeichnet, daß die Druckwalzen (2, 3, 4, ..7, ...) beheizt sind, daß nahe dem Spalt zwischen der einzelnen Druckwalze und der Umfangsfläche der Walze (1) jeweils eine verfahrbare Heizeinrichtung (8, 9, 10, ...13, ...) zum Anschmelzen von Siegelschichten und/oder zum Verändern mechanischer Eigenschaften der Kunststoffolienbänder angeordnet ist, daß der Abstand der einzelnen Heizeinrichtung zu der Walze (1) einstellbar ist und die einzelne Heizeinrichtung entlang einem Teilstück der Bahn des Kunststoffolienbandes verfahrbar ist, daß die Druckwalzen hydraulisch, pneumatisch oder mechanisch unterschiedlich stark gegen die Walze (1) andrückbar sind, um einen variablen Liniendruck auf das einzelne Kunststoffolienband auszuüben und daß der Walze (1) zumindest eine Kühl-, Präge- und/oder Preßeinrichtung zugeordnet ist.

2. Vorrichtung nach Anspruch 1, dadurch gekennzeichnet, daß die Anzahl der siegelfähigen Kunststoffolienbänder kleiner/ gleich der Anzahl der Druckwalzen ist und bis zu 20 Stück beträgt.

3. Vorrichtung nach Anspruch 1, dadurch gekennzeichnet, daß die einzelne Druckwalze ein beheizter Presseur mit einem Metallkörper und einer Gummibeschichtung ist.

4. Vorrichtung nach Anspruch 1, dadurch gekennzeichnet, daß die einzelne Druckwalze eine hochglanzpolierte Metallwalze ohne Gummibeschichtung ist.

5. Vorrichtung nach Anspruch 1, dadurch gekennzeichnet, daß die einzelne Heizeinrichtung (8, 9, ...13, ...) ein entlang dem Kunststoffolienband verfahrbarer Infrarotstrahler ist.

6. Vorrichtung nach Anspruch 1, dadurch gekennzeichnet, daß der Folienverbund (21) nach dem Ablösen von der Walze (1) eine Kühlanordnung (22, 23) aus einem Ventilator (22) und/oder einer temperierbaren Kühlwalze (23) und/oder eine temperierbare Doppelbandpresse (25) und/oder ein Kühlbad durchläuft.

7. Vorrichtung nach Anspruch 1, dadurch gekennzeichnet, daß der Folienverbund (21) nach dem Ablösen von der Umfangsfläche der Walze (1) über eine Walzenanordnung (28, 29) aus angetriebenen, temperierbaren Walzen mit unterschiedlichen Durchmessern zum nachträglichen Dehnen und Eliminieren der Rollneigung des Folienverbundes geführt ist.

8. Vorrichtung nach Anspruch 1, dadurch gekennzeichnet, daß ein endlos über Rollen umlaufendes Prägeband (34) an der Unterseite des Folienverbundes (21) über einen Abschnitt der Umfangsfläche der Walze anliegt, um die Unterseite des Folienverbundes vor dem Ablösen von der Walze (1) zu prägen.

9. Vorrichtung nach Anspruch 1, dadurch gekennzeichnet, daß der Folienverbund (21) zwischen zwei zueinander in Laufrichtung des Folienverbundes versetzten Prägefolien (31, 33) über die Umfangsfläche der Walze (1) geführt ist, und daß die Prägefolien die Unter- und Oberseite des Folienverbundes mit einer Prägung versehen und nach dem Ablösen von der Walze (1) aufrollbar sind.

10. Vorrichtung nach Anspruch 1, dadurch gekennzeichnet, daß der Folienverbund (21) nach dem Ablösen von der Walze (1) einen Spalt zwischen zwei Prägewalzen einer Prägestation (35) durchläuft.

11. Vorrichtung nach einem oder mehreren Ansprüchen 1 bis 10, dadurch gekennzeichnet, daß der Folienverbund (21) mit hoher Zugspannung in Mäanderform über temperierbare Walzen (37, 38) geführt ist, die in Vertikalrichtung zueinander versetzt sind und deren Oberflächen hochglanzpoliert oder strukturiert sind und die nach der Walze (1) angeordnet sind.

12. Vorrichtung nach einem oder mehreren der Ansprüche 1 bis 5, dadurch gekennzeichnet, daß der Folienverbund (21) nach dem Ablösen von der Walze (1) in Planlage eine Kühlanordnung (44) durchläuft, die aus einer Anzahl von Ventilatoren (41) und/oder Kühlwalzen (42, 43) besteht, die zueinander versetzt, alternierend mit der Ober- und Unterseite des Folienverbundes (21) in Kontakt stehen.

13. Verfahren zum Herstellen eines mehrschichtigen Folienverbundes aus biaxial und/oder monoaxial und/oder unverstreckten thermoplastischen Kunststoffolien, die zumindest einseitig mit einer Siegelschicht koextrudiert sind, durch Siegeln unter Druck- und Wärmeanwendung, unter Verwendung der Vorrichtung gemäß Anspruch 1, dadurch gekennzeichnet, daß der Folienverbund durch kontinuierliches, additives Aufsiegeln einzelner bewegter Kunststoffolienbänder auf ein bewegtes erstes Kunststoffolienband bis zu einer vorgegebenen Enddicke aufgebaut wird, wobei die Kunststoffolienbänder getrennt und im Abstand voneinander einer beheizbaren Walzenfläche zugeführt und entlang dieser Walzenfläche geführt werden, daß jedes Kunststoffolienband vor dem Auflaufen auf die beheizte Walzenfläche zusätzlich erwärmt wird, um die Siegelschichten der Kunststoffolienbänder anzuschmelzen und/oder die mechanischen Eigenschaften der Kunststoffolienbänder zu beeinflussen, daß auf jedes der Kunststoffolienbänder unmittelbar an seiner Auflaufstelle auf die Walzenfläche Druck ausgeübt wird und daß der Folienverbund nach dem Ablösen von der Walzenfläche durch Anblasen mit Kühlluft und/oder durch Kontakt mit Kühlwalzen und/oder einer gekühlten Doppelbandpresse abgekühlt wird und/oder ein- oder beidseitig geprägt wird.

14. Verfahren nah Anspruch 13, dadurch gekennzeichnet, daß gleichartige oder unterschiedliche Kunststoffolienbänder miteinander gesiegelt werden.

15. Verfahren nach Anspruch 14, dadurch gekennzeichnet, daß die abwechselnd aufeinandergeschichteten mono- und/oder biaxial verstreckten sowie unverstreckten Monofolienbänder aus demselben Polymerwerkstoff miteinander versiegelt werden, wobei die unverstreckten Folienbänder gegenüber den verstreckten Folienbändern eine niedrigere Schmelztemperatur aufweisen.

16. Verfahren nach Anspruch 13, dadurch gekennzeichnet, daß die Siegeltemperatur unterhalb der Schmelztemperatur der einzelnen Kunststoffolienbänder gehalten wird.

17. Verfahren nach den Ansprüchen 13 und 15, dadurch gekennzeichnet, daß der Folienverbund nach dem Ablösen von der Walzenfläche über eine Walzenanordnung mit angetriebenen Walzen von unterschiedlichen Durchmessern geführt und durch diese eine Zugspannung auf den Folienverbund ausgeübt wird, der gedehnt wird, um seiner Rollneigung entgegenzuwirken.

18. Verfahren nach Anspruch 13, dadurch gekennzeichnet, daß als Ausgangsmaterial für den Folienverbund zusätzlich zu den Kunststoffolienbändern Bänder aus anderen Materialien als Kunststoff und Verbunde solcher Bänder mit Kunststoffolien kontinuierlich mit den Kunststoffolienbändern gesiegelt werden.

19. Verfahren nach einem oder mehreren der Ansprüche 13 bis 18, dadurch gekennzeichnet, daß die Behandlungsschritte Kühlen, Dehnen und Prägen des Folienverbundes nach seinem Ablösen von der Walzenfläche in allen möglichen Kombinationen vorgenommen werden.

20. Verfahren zum Herstellen einer mehrlagigen Dickfolie aus Folienverbunden, bei dem anstelle einzelner Kunststoffolienbänder als Ausgangsmaterial mehrschichtige Folienverbunde miteinander gesiegelt werden, die nach einem oder mehreren der Ansprüche 13 bis 19 hergestellt sind.

## Claims

1. An apparatus for producing a multilayered film composite comprised of sealed-together plastics films, said apparatus comprising a plurality of supply rolls on which the plastics films in web form are wound, with a heatable roller (1) serving as the sealing tool on whose circumferential surface the webs of plastics film (14, 15, 16) are sealed, with compression rolls (2, 3, 4, ... 7, ...) resting against the circumferential surface of the roller (1) at equal or different distances from one another, with each web of plastics film being passed over the allocated compression roll and running through the contact surface between said compression roll and the roller (1), and with the webs of plastics films (14, 15, 16) running onto the circumferential surface of the roller (1) at mutual distances being mutually sealed by applying heat and pressure, by means of the compression rolls (2, 3, 4, ... 7, ...), to the webs of plastics film being transported in the super-imposed state, characterized in that the compression rolls (2, 3, 4, ... 7, ...) are heated, that close to the nips between the individual compression rolls and the circumferential surface of the roller (1) there is arranged in each case a movable heating device (8, 9, 10, ..., 13, ...) for the incipient melting of the sealing layers and/or for changing mechanical properties of the webs of plastics film, that the distance between each of the heating devices and the roller (1) can be adjusted and that each individual heating device can be moved along a section of the path of the web of plastics film, that the compression rolls can be pressed with different intensities against the roller (1) by hydraulic, pneumatic or mechanical means, in order to exert a variable linear pressure onto each of the webs of plastics film, and in that the roller (1) is adjoined by at least one of a cooling, embossing and/or pressing device.

2. The apparatus as claimed in claim 1, characterized in that the number of sealable plastics film webs is less than/equal to the number of compression rolls and is up to 20.

3. The apparatus as claimed in claim 1, characterized in that the individual compression roll is a heated impression cylinder having a metal body and a rubber covering.

4. The apparatus as claimed in claim 1, characterized in that the individual compression roll is a highly polished metal roll without rubber covering.

5. The apparatus as claimed in claim 1, characterized in that the individual heating device (8, 9, 10, ... 13, ...) is an infrared radiator which can be moved along the plastics film web.

6. The apparatus as claimed in claim 1, characterized in that, after being detached from the roller (1), the film composite (21) runs through a cooling arranement (22, 23) comprising a fan (22) and/or a temperature-controllable cooling roll (23) and/or a temperature-controllable twin-belt press (25) and/or a cooling bath.

7. The apparatus as claimed in claim 1, characterized in that, after being detached from the circumferential surface of the roller (1), the film composite is guided over an arrangement of rolls (28, 29) comprising driven, temperature-controllable rolls having different diameters, in order to effect stretching and thus to eliminate the tendency to curling of the film composite.

8. The apparatus as claimed in claim 1, characterized in that, on the outer side of the film composite (21), an embossing belt (34) endlessly revolving about rolls is adjacent to a section of the circumferential surface of the roller (1) for embossing the outer side of the film composite prior to detachment of the latter from the roller.

9. The apparatus as claimed in claim 1, characterized in that the film composite (21) is passed over the circumferential surface of the roller (1) between two embossing foils (31, 33) which are arranged at a distance from one another, in the running direction of the film composite, and that the embossing foils provide the underside and upper side of the film composite with an embossing and, after detachment from the roller (1), are wound up.

10. The apparatus as claimed in claim 1, characterized in that, after being detached from the roller (1), the film composite (21) runs through a nip between two embossing rolls of an embossing station (35).

11. The apparatus as claimed in one or more of claims 1 to 10, characterized in that the film composite (21) is guided with high tension in a meandering form over temperature-controllable rolls (37, 38), which are offset with respect to each other in the vertical direction and the surfaces of which are highly polished or textured and which are arranged downstream of the roller (1).

12. The apparatus as claimed in one or more of claims 1 to 5, characterized in that, after being detached from the roller (1), the film composite (21) runs in a flat position through a cooling arrangement (44), which comprises a number of fans (41) and/or cooling rolls (42, 43) which, offset with respect to one another, are alternately in contact with the upper side and underside of the film composite (21).

13. A process for producing a multilayered film composite from biaxially stretched and/or monoaxially stretched and/or unstretched thermoplastic, coextruded plastics films, which are provided on at least one side with a sealing layer, by sealing under pressure and heat application, characterized in that the film composite is built up by continuous, additive sealing of individual, moving plastics film webs onto a moving first plastics film web up to a given final thickness, the plastics film webs being fed separately and at a distance from one another onto a heatable roller surface and being guided along this roller surface, that each plastics film web is additionally heated before entry onto the heated roller surface, in order to incipiently melt the sealing layers of the plastics film webs and/or to influence the mechanical properties of the individual film webs, that pressure is exerted onto each of the plastics film webs directly at its point of entry onto the roller surface, and that, after being detached from the roller surface, the film composite is cooled down and/or is embossed on one or both surfaces by blowing with cooling air and/or by contact with cooling rolls and/or with a cooled twin-belt press.

14. The process as claimed in claim 13, characterized in that like or unlike plastics film webs are sealed together.

15. The process as claimed in claim 14, characterized in that alternately layered monoaxially and/or biaxially stretched and unstretched monofilm webs of the same polymer material are sealed together, the unstretched film webs having a lower melting temperature than the stretched film webs.

16. The process as claimed in claim 13, characterized in that the sealing temperature is kept below the melting temperature of the individual plastics film webs.

17. The process as claimed in claims 13 and 15, characterized in that, after being detached from the roller surface, the film composite is guided over an arrangement of driven rolls having different diameters, and that these rolls exert a tensile stress on the film composite which is thereby stretched in order to eliminate its tendency to curling.

18. The process as claimed in claim 13, characterized in that, as starting material for the film composite, in addition to the plastics film webs, webs of other materials than plastics and composites of such webs with plastics films are continuously sealed with the plastics film webs.

19. The process as claimed in one or more of claims 13 to 18, characterized in that the treatment steps of cooling, stretching and embossing the film composite are performed in all possible combinations alter it leaves the roller surface.

20. A process for producing a multilayered thick film or sheet from film composites, in which, instead of individual plastics film webs, the starting materials, which are sealed together, are multilayered film composites produced as claimed in one or more of claims 13 to 19.

## Revendications

1. Dispositif pour la fabrication d'un stratifié de feuilles à couches multiples à partir de feuilles en matière plastique scellées ensemble, comprenant un nombre de rouleaux d'alimentation sur lesquels sont enroulées les feuilles en matière plastique en forme de bandes, un tambour (1) à température réglable en tant qu'outil de scellement, dont la surface du pourtour sert au scellement des bandes de feuilles en matière plastique (14, 15, 16) dans lequel, le long de la surface du pourtour du tambour (1), sont appliqués de façon équidistante ou à des distances différentes les uns par rapport aux autres des cylindres presseurs (2, 3, 4, ...7, ...), chaque bande de feuille en matière plastique pouvant être guidée par l'intermédiaire du cylindre presseur associé et parcourant la surface de contact entre le cylindre presseur et le tambour, les bandes (14, 15, 16) de feuilles en matière plastique arrivant espacées les unes des autres sur la surface du pourtour du tambour (1) pouvant être scellées ensemble au moyen des cylindres presseurs (2, 3, 4...7, ...), par application de pression et de chaleur sur des bandes de feuilles en matière plastique transportées de façon superposée, caractérisé en ce que les cylindres presseurs (2, 3, 4,... 7,...) sont chauffés, en ce que respectivement un dispositif de chauffage (8, 9, 10,..., 13...) déplaçable, destiné à commencer à faire fondre des couches de scellement et/ou à modifier des caractéristiques mécaniques des bandes de feuilles en matière plastique, est disposé près de l'intervalle entre le cylindre presseur individuel et la surface du pourtour du tambour (1), en ce que la distance du dispositif de chauffage individuel par rapport au tambour (1) peut être réglée et le dispositif de chauffage individuel peut être déplacé le long d'une portion de trajet de la bande de feuille en matière plastique en ce que les cylindres presseurs peuvent être pressés contre le tambour (1) avec une force d'appui variable de façon hydraulique, pneumatique ou mécanique pour exercer une pression variable sur une ligne sur la bande individuel le de feuille en matière plastique et en ce qu'au moins un dispositif de refroidissement, d'estampage et/ou de pressage est associé au tambour (1).

2. Dispositif selon la revendication 1, caractérisé en ce que le nombre des bandes de feuilles en matière plastique pouvant être scellées est inférieur/égal au nombre de cylindres presseurs et va jusqu'à 20.

3. Dispositif selon la revendication 1, caractérisé en ce que le cylindre presseur individuel est un rouleau presseur chauffé comprenant un corps métallique et un revêtement en caoutchouc.

4. Dispositif selon la revendication 1, caractérisé en ce que le cylindre presseur individuel est un cylindre métallique poli brillant sans revêtement en caoutchouc.

5. Dispositif selon la revendication 1, caractérisé en ce que le dispositif de chauffage individuel (8, 9, ..., 13...) est un émetteur infrarouge déplaçable le long de la bande de feuille en matière plastique.

6. Dispositif selon la revendication 1, caractérisé en ce qu'après avoir quitté le tambour (1), le stratifié (21) de feuilles parcourt un agencement de refroidissement (22, 23) comprenant un ventilateur (22) et/ou un cylindre de refroidissement (23) à température réglable et/ou une presse à deux bandes sans fin (25) à température réglable et/ou un bain de refroidissement.

7. Dispositif selon la revendication 1, caractérisé en ce qu'après avoir quitté la surface du pourtour du tambour (1), le stratifié de feuilles (21) passe sur un agencement de cylindres (28, 29) comprenant des cylindres à température réglable et entraînés, ayant des diamètres différents destinés à l'étirage ultérieur et à une élimination d'une ondulation du stratifié de feuilles.

8. Dispositif selon la revendication 1, caractérisé en ce qu'une bande à estamper (34) tournant sans fin sur des poulies, est appliquée sur la face inférieure du stratifié de feuilles (21) par une section de la surface du pourtour du tambour pour estamper la face inférieure du stratifié de feuilles avant qu'il ne quitte le tambour (1).

9. Dispositif selon la revendication 1, caractérisé en ce que le stratifié de feuilles (21) est guidé autour de la surface du pourtour du tambour (1) entre deux feuilles d'estampage (31, 33) décalées l'une par rapport à l'autre en direction de défilement du stratifié de feuilles et en ce que les feuilles d'estampage pourvoient la face supérieure et inférieure du stratifié de feuilles d'un estampage et peuvent être enroulées après avoir quitté le tambour (1).

10. Dispositif selon la revendication 1, caractérisé en ce qu'après avoir quitté le tambour (1), le stratifié de feuilles (21) passe par une fente entre deux rouleaux à estamper d'une station (35) d'estampage.

11. Dispositif selon une ou plusieurs des revendications 1 à 10, caractérisé en ce que le stratifié de feuilles (21) est guidé selon un trajet en méandres, avec un effort de traction élevé à travers des cylindres (37, 38) à température réglable, qui sont décalés les uns par rapport aux autres en direction verticale et dont les surfaces sont polies brillantes ou structurées et qui sont disposés en aval du tambour (1).

12. Dispositif selon une ou plusieurs des revendications 1 à 5, caractérisé en ce qu'après avoir quitté le tambour (1), le stratifié (21) de feuilles parcourt à plat un agencement de refroidissement (44) qui comprend un nombre de ventilateurs (41) et/ou des cylindres de refroidissement (42, 43), décalés les uns par rapport aux autres, qui sont en contact de façon alternée avec la face supérieure et inférieure du stratifié (21) de feuilles.

13. Procédé pour la fabrication d'un stratifié de feuilles à couches multiples à partir de feuilles en matière plastique thermoplastique étirées selon un et/ou deux axes et/ou non étirées, qui sont extrudées en commun avec une couche de scellement sur au moins un côté, par application de pression et de chaleur en utilisant le dispositif selon la revendication 1, caractérisé en ce que le stratifié de feuilles est réalisé par un scellement additionnel en continu de bandes de feuille en matière plastique individuelles en mouvement sur une première bande de feuille en matière plastique en mouvement, jusqu'à une épaisseur finale prédéfinie, les bandes de feuilles en matière plastique étant amenées séparément à distance les uns par rapport aux autres à une surface de tambour pouvant être chauffée et guidées le long de cet te surface, en ce qu'avant d'arriver sur la surface du tambour chauffé, chaque bande de feuille en matière plastique est chauffée de façon supplémentaire pour commencer à faire fondre les couches de scellement des bandes de feuilles en matière plastique et/ou pour modifier les caractéristiques mécaniques des bandes de feuille en matière plastique en ce qu'une pression est excercée sur chaque bande de feuille en matière plastique directement à son endroit d'arrivée sur la surface du tambour et en ce qu'après avoir quitté la surface du tambour, le stratifié de feuilles est refroidi par soufflage d'air de refroidissement et/ou par un contact avec des cylindres de refroidissement et/ou par une presse à deux bandes sans fin refroidie et/ou il est estampé d'un seul ou des deux côtés.

14. Procédé selon la revendication 13, caractérisé en ce que des bandes de feuilles en matière plastique similaires ou différentes sont scellées les unes avec les autres.

15. Procédé selon la revendication 14, caractérisé en ce que les bandes formées d'une seule feuille du même matériau de polymère, étirées selon un et/ou deux axes ainsi que non étirées, superposées en alternance, sont scellées les unes avec les autres, les bandes de feuilles non étirées présentant par rapport aux bandes de feuilles étirées une température de fusion plus basse.

16. Procédé selon la revendication 13, caractérisé en ce que la température de scellement est maintenue en-dessous de la température de fusion des bandes de feuilles en matière plastique individuelles.

17. Procédé selon la revendication 13 et 15, caractérisé en ce qu'après avoir quitté la surface du tambour, le stratifié de feuilles est guidé à travers un agencement de cylindres comportant des cylindres entraînés avec des diamètres différents, qui exercent un effort de traction sur le stratifié de feuilles qui est étiré pour empêcher son ondulation.

18. Procédé selon la revendication 13, caractérisé en ce que comme matériau de départ pour le stratifié de feuilles, en supplément des bandes de feuilles en matière plastique, des bandes réalisées en d'autre matériau que la matière plastique et des stratifiés de telles bandes comprenant des feuilles en matière plastique, sont scellés de façon continue avec des bandes de feuilles en matière plastique.

19. Procédé selon une ou plusieurs des revendications 13 à 18, caractérisé en ce qu'après qu'il ait quitté la surface du tambour, les étapes de traitement, à savoir le refroidissement, l'étirage et l'estampage du stratifié de feuilles sont effectuées suivant toutes les combinaisons possibles.

20. Procédé pour la fabrication d'une feuille épaisse multicouches à partir de stratifiés de feuilles dans lequel au lieu de bandes de feuille en matière plastique individuelles comme matériau de départ, des stratifiés individuels multicouches qui sont fabriqués selon une ou plusieurs des revendications 13 à 19 sont scellés les uns avec les autres.
